Europäisches Patentamt

European Patent Office

Office européen des brevets

(19)

(11) Publication number: **0 284 054 B1**

(12) **EUROPEAN PATENT SPECIFICATION**

(45) Date of publication of patent specification: **10.06.92**   (51) Int. Cl.⁵: **F02P 5/15**

(21) Application number: **88104678.3**

(22) Date of filing: **23.03.88**

(54) **Spark ignition timing system for internal combustion engine with feature of supression of jerking during engine acceleration.**

(30) Priority: **25.03.87 JP 69215/87**
      **26.03.87 JP 70439/87**

(43) Date of publication of application:
      **28.09.88 Bulletin 88/39**

(45) Publication of the grant of the patent:
      **10.06.92 Bulletin 92/24**

(84) Designated Contracting States:
      **DE GB**

(56) References cited:
      **EP-A- 0 233 449       FR-A- 2 531 145**
      **GB-A- 2 060 063       GB-A- 2 175 955**
      **US-A- 4 236 214       US-A- 4 257 377**
      **US-A- 4 377 996       US-A- 4 498 438**

(73) Proprietor: **JAPAN ELECTRONIC CONTROL SYSTEMS CO., LTD.**
      **No. 1671-1, Kasukawa-cho**
      **Isezaki-shi Gunma-ken(JP)**

(72) Inventor: **Tomisawa, Naoki Japan Elec. Control Syst. Co. Ltd**
      **1671-1, Kasukawa-cho**
      **Isesaki-shi Gunma-ken, 372(JP)**

(74) Representative: **Schoppe, Fritz, Dipl.-Ing.**
      **Seitnerstrasse 42**
      **W-8023 Pullach bei München(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a spark ignition timing control system for an internal combustion engine in accordance with the prior art portion of claim 1 and to a method of controlling the ignition timing for an internal combustion engine in accordance with the prior art portion of claim 7.

In general, spark ignition timing is determined relative to MBT (minimum advance angle for best torque) based on preselected ignition timing control parameters, such as engine load, engine speed and so forth. The spark ignition timing for each engine cylinder is set at a timing, at which a crank reference signal representative of 70° or 66° before TDC (top dead center) (hereafter "70° BTDC (before top dead center)" of each engine cylinder in compression stroke is output. Crankshaft angular position is monitored by counting crank position signals which are generated at predetermined angles, e.g. 2° or 1° increments of crankshaft angular displacement. Spark ignition is initiated at the crankshaft angular position matching the set spark ignition timing. Such general spark ignition timing control has been discussed in the Japanese Patent First (unexamined) Publication (Tokkai) Showa 59-126071.

On the other hand, there have been developed various electronic control systems for controlling engine and engine accessory control with substantially high precision. For example, it has become popular to control fuel delivery amount for engine cylinder in a manner precisely corresponding to the engine load. In modern fuel injection control systems, high precision and high response ability to fuel demand has been achieved. In such fuel injection control, acceleration enrichment is performed in response to acceleration demand which is represented by increase of throttle angular position. By acceleration enrichment, engine output torque increase precisely corresponds to the acceleration demand.

However, because of intertia moment, vehicle speed and engine speed cannot be made to increase quickly enough to follow the increase of the engine output torque. This creates a torsional resonance of the engine block on the engine mounts which causes jerking of the vehicle body. Especially, in case of transversely mounted engines, wherein the magnitude of jerking tends to be amplified by the rotational torque created due to inertia of the engine block in a direction matching the direction of jerking. This clearly degrades drivability and riding comfort of the vehicle.

US-A-4,498,438 discloses a spark ignition timing control system of the above-mentioned type and a method of controlling the ignition timing for an internal combustion engine of the above-mentioned kind. In accordance with this prior art method, it is firstly determined whether or not the actual crank angle corresponds to suitable timing for the ignition control on the basis of signal from the crank angle sensor and from a cylinder identifying sensor. Then, the current engine speed is detected. Data corresponding to the actual engine speed are stored in a memory. Subsequently, it is determined whether or not a current engine speed exceeds a weighting average value which was previously determined and stored in the memory. Then, the previous weighting average value stored in the memory is updated. Thereinafter, the difference between the new averaged weighting value and the current engine speed and a differential delay angle for correcting the spark advance angle of the crank angle are determined. A differential delay angle used for correcting the spark advance angle is subsequently determined on the basis of the difference between the newly determined averaged value and the current engine speed. Then, the effective spark advance angle is determined on the basis of a basic spark advance angle and the differential delay angle. The timing of the ignition current to be applied to the spark plugs is then controlled on the basis of the effective spark advance angle determined such. Thus, this reference teaches that the degree of acceleration directly influences the correction quantity of the ignition advance angle value. Since the ignition timing is shifted in the direction towards the retardation angle, the engine output torque increase during the acceleration phase is reduced thereby. Thus, this prior art reference merely teaches a suppression of the jerking during the acceleration phase by reducing the possible torque at the beginning of the acceleration.

Starting from the above prior art, the present invention is based on the object of providing a spark ignition timing control system and a method for controlling the spark ignition timing for an internal combustion engine determining the spark ignition timing such that the jerking is effectively suppressed whilst assuring a maximum torque of the engine during the acceleration phase.

This object is achieved by a spark ignition timing control system in accordance with claim 1 and by a method of controlling the ignition timing for an internal combustion engine in accordance with claim 7.

## BRIEF DESCRIPTION OF THE DRAWINGS

The present invention will be understood more fully from the detailed description given herebelow and from the accompanying drawings of the preferred embodiment of the invention.

In the drawings:

**Fig. 1** is a schematic block diagram of the preferred embodiment of a spark igntiion control system, according to the present invention;

**Fig. 2** is a block diagram explanatorily showing the detailed construction of a control unit in the preferred embodiment of the spark ignition control system of **Fig. 1**;

**Fig. 3** is a flowchart of a routine for deriving engine speed variation magntide $\Delta N$;

**Fig. 4** is a flowchart of a routine for controlling spark ignition timing;

**Fig. 5** is a chart showing variation of throttle valve angular position, engine output torque, magnitude of jerking and spark ignition timing during engine acceleration, as controlled utilizing the routine of **Fig. 4**;

**Fig. 6** is a graph showing relationship between engine speed and $\Delta N$ derivation cycle;

**Fig. 7** is a flowchart showing modification of routine for controlling spark ignition timing; and

**Fig. 8** is a chart showing relationship of engine speed and spark advance as controlled utilizing the routine of **Fig. 7**.

## DESCRIPTION OF THE PREFERRED EMBODIMENT

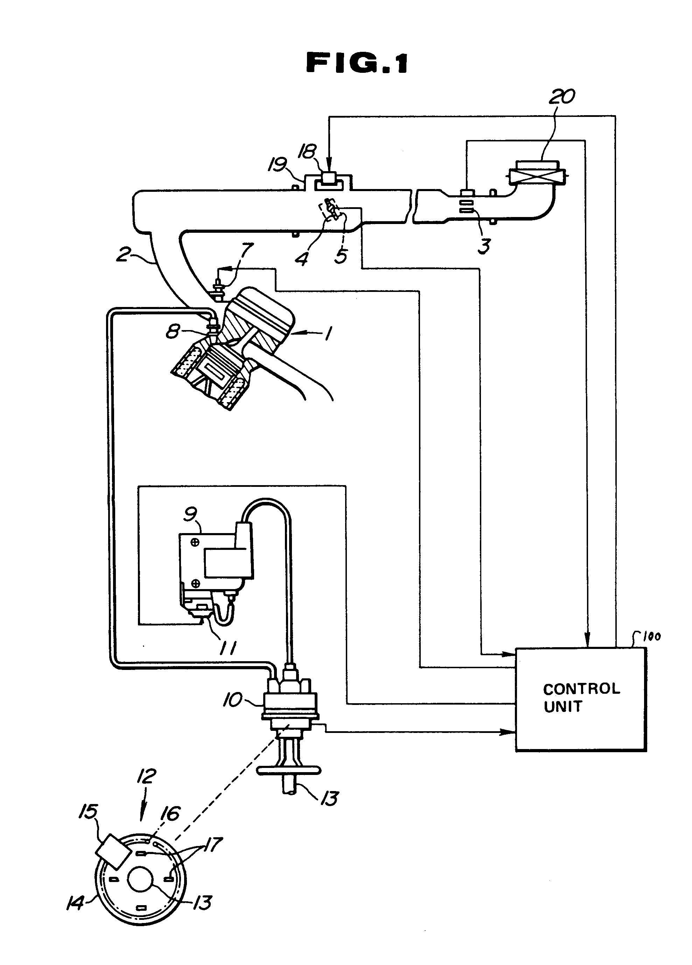

Referring now to the drawings, particularly to **Fig. 1**, the preferred embodiment of a spark ignition control system is directed to control spark ignition timing for an internal combustion engine which is generally represented by the reference numeral **"1"**. In the shown embodiment, the internal combustion engine **1**, with which the preferred embodiment of the spark ignition control system is associated, is a so-called "sequential injection type" fuel injection internal combustion engine. In the construction illustrated in **Fig. 1**, the engine has an induction system **2**, in which is disposed an air flow meter **3** for monitoring air flow rate Q as the engine load indicative data and producing an air flow rate indicative signal. A throttle chamber is defined in the induction system **2** to pivotably receive therein a throttle valve **4**. A throttle angle sensor **5** is associated with the throttle valve **4** in order to monitor the throttle valve angular position and to produce a throttle angle indicative signal. The induction system has an intake manifold including a plurality of branches, each of which is connected to an intake port of a corresponding one of engine cylinders.

In order to perform sequential fuel injection, fuel injection valves **7** are inserted into respective branches of the intake manifold to inject controlled amount of fuel at respective controlled timings. Namely, the fuel injection timing of each fuel injection valve **7** is so controlled as to perform fuel injection in synchronism with engine revolution cycle to deliver the fuel through the intake port in the form of an air/fuel mixture during the intake valve open period.

Spark ignition plugs **8** are inserted into respective engine cylinder for causing spark ignition at respectively and independently controlled timings. The spark ignition plugs **8** are connected to a distributor **10** which distributes high voltage induced in a secondary coil in a ignition coil **9**. A power transistor **11** is coupled with the ignition coil **9** for controlling the timing of induction of high voltage in the secondary coil thereof.

A crank angle sensor **12** is incorporated in the distributor **10**. The crank angle sensor **12** thus monitors crankshaft angular position by monitoring rotor position in the distributor **10**. Namely, since the rotor in the distributor rotates precisely in synchronism with rotation of the crankshaft, the crankshaft angular position can be monitored by monitoring the angular position of the rotor. In order to monitor the rotor angular position, a rotary disc **14** is rigidly fixed to a distributor shaft **13** so that the rotary disc may be driven with the rotor by means of the distributor shaft.

A plurality of crank position signal slits **16** and a plurality of crank reference signal slits **17** are formed through the rotary disc **14**. The crank position signal slits **16** are arranged in alignment along the outer peripheral edge of the rotary disc with a center-to-center interval corresponding to 2° of crank shaft angular displacement. On the other hand, the crank reference signal slits **17** are arranged at radially shifted positions from the crank position signal slits **16**. The crank reference signal slits **17** are circumferentially oriented at positions corresponding to 70° BTDC of respectively corresponding engine cylinder in compression stroke.

Since the shown embodiment is directed to 4-cylinder engine, four crank reference signal slits are formed in the rotary disc **14** with center-to-center interval of 90° in circumferential direction. Since the distributor rotates at a speed half that of the crankshaft, the rotor rotates one cycle while crankshaft rotates the two cycles which comprise one engine revolution cycle. Therefore, the 90° intervals between the crank reference signal slots **17** as spaced represent the crankshaft angular positions which are separated by 180°C.

Opposing the rotary disc **14**, an optical sensor **15** is provided to detect respective slits **16** and **17**. The sensor **15** outputs crank position signals $\theta_{pos}$ at every given angular displacement intervals (4°) of the crankshaft. The sensor also produces crank reference signals $\theta_{ref}$ representative of the 70° BTDC crankshaft position for the respective engine cylinders in compression stroke.

In the preferred construction, one of the four crank reference signal slits **17** the one which corresponds to 70° BTDC of No. 1 cylinder, is provided a different circumferential width so that the pulse width of the crank reference signal $\theta_{ref}$ to be generated thereby can be distinguished from the crank reference signals generated by the other crank reference signal slits. This unique width crank reference signal $\theta_{ref}$ thus enables identification of the engine cylinder in compression stroke.

In the construction of **Fig. 1**, the induction system **2** includes an idling air passage **19** by-passing the throttle chamber. A idling speed adjuster mechansim **18** is provided in the idling air passage **19** for adjusting idling speed according to the engine driving condition. The induction system also incorporates an air cleaner **20**.

The air flow meter **3**, the throttle angle sensor **5** and crank angle sensor **12** are connected to a microprocessor-based control unit **100**. Though it is not illustrated, the control unit **100** may be also connected to various sensors, such as an engine coolant temperature sensor, a starter motor and so forth, to receive therefrom correction parameters for correcting spark advance angle.

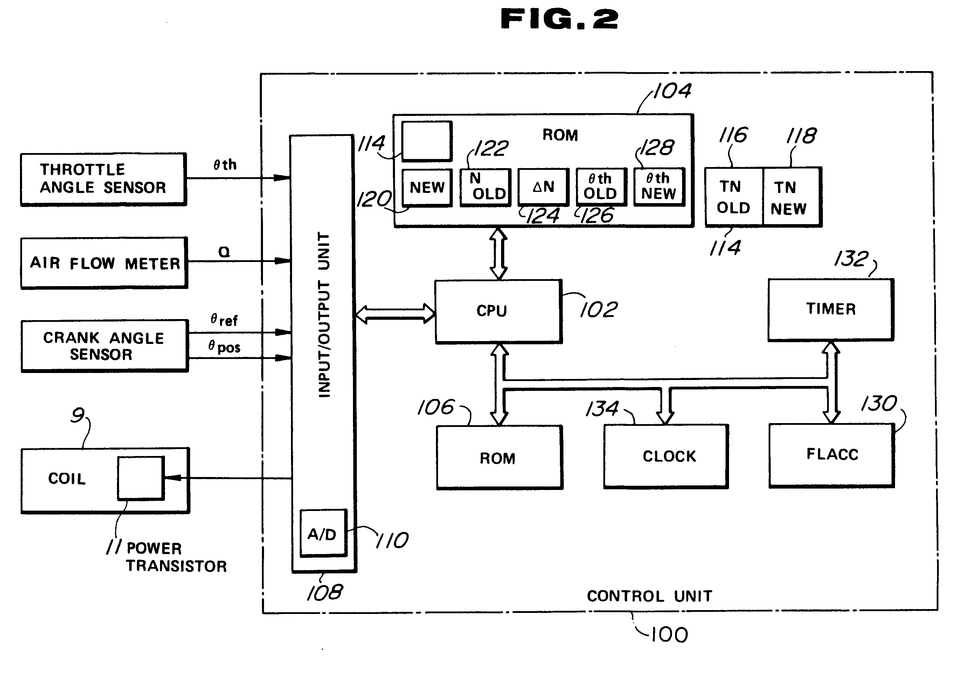

**Fig. 2** explanatorily shows detailed construction of the control unit **100** to be employed in the preferred embodiment of the spark ignition timing control system according to the invention. As set forth, the control unit **100** comprises a microprocessor having CPU **102**, RAM **104**, ROM **106** and input/output unit **108**. The input/output unit **108** may have an analog-to-digital converter **110** for converting analog input, such as the throttle angle signal $\theta_{th}$, the intake air flow rate indicative signal Q and so forth, into digital signals so that the control unit **100** may process those signals in digital manner.

Further detailed construction of the control unit illustrated in **Fig. 2** will be explained later during the discussion of the preferred process of spark ignition timing control to be performed by the preferred embodiment of the spark ignition timing control system.

The control unit **100** executes various routines for performing spark igntion timing control. Namely. basic spark advance ADV is determined based on the engine speed N and a basic fuel injection quantity corresponding to a Tp value (K x Q/N : K is constant) at predetermined timing intervals, e.g. every 10 ms. Various correction routines for correcting the basic spark advance ADV are executed at respectively predetermined timings for adjusting the spark advance according to various correction factors, such as engine knocking condition, engine coolant temperature and so forth. Further routine is performed for setting spark ignition timing data to the input/output unit **108** for causing the spark ignition to occur at the timings derived. In practice, this routine for setting the spark timing data in the input/output unit **108** is performed in response to every crank reference signal $\theta_{ref}$.

These routines are well known to those skilled in the art and need not be discussed in detail.

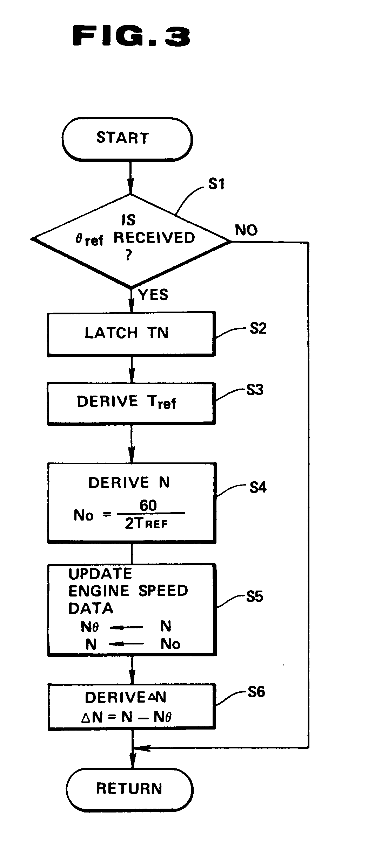

**Fig. 3** shows a flowchart of routine for deriving the engine speed data N and detecting engine speed variation. In the process. first, a check is performed to determine whether the crank reference signal $\theta_{ref}$ is received, at a step **S1**. If the crank reference signal $\theta_{ref}$ is not detected as checked at the step **S1**, process goes END. On the other hand, when the crank reference signal $\theta_{ref}$ is detected as checked at the step **S1**, an engine speed timer value TN in an engine speed timer **112** is latched and transferred to a memory block **114** of an engine speed timer register **116** at a step **S2**. The engine speed timer register **116** has another memory block **118** for storing engine speed timer value $TN_{old}$ representative of input timing data of immediately preceding crank reference angle signal $\theta_{ref}$.

Based on the crank reference signal input timing data stored in the memory blocks **114** and **118**, an interval $T_{ref}$ between the occurences of the crank reference signals $\theta_{ref}$ is derived at a step **S3**. The engine speed N is then derived according to the following equation:

$$N = 60/2T_{ref}$$

at a step **S4.** The fresh engine speed data $N_{new}$ thus derived at the step **S4** is set in a memory block **120** in RAM **104**, which memory block serves as a temporary register for temporarily storing the $N_{new}$ data, at a step **S5**. The RAM **104** also has another memory block **122** for temporarily storing engine speed data $N_{old}$ which is derived in the immediately preceding execution cycle at occurence of the immediately preceding crank reference signal. Upon setting the fresh engine speed data $N_{new}$ at the step **S5**, the engine speed data stored in the memory block **120** is transferred to the memory block **122**. Therefore, at the step **S5**, the engine speed data is updated.

Based on the engine speed data $N_{new}$ and $N_{old}$ stored in the memory blocks **120** and **122**, an engine speed variation data $\Delta N$ is derived at a step **S6**. The derived engine speed variation data $\Delta N$ is stored in a memory block **124** of RAM **104**. After the process at the step **S6**, process returns to the main routine which governs various spark ignition timing control routines.

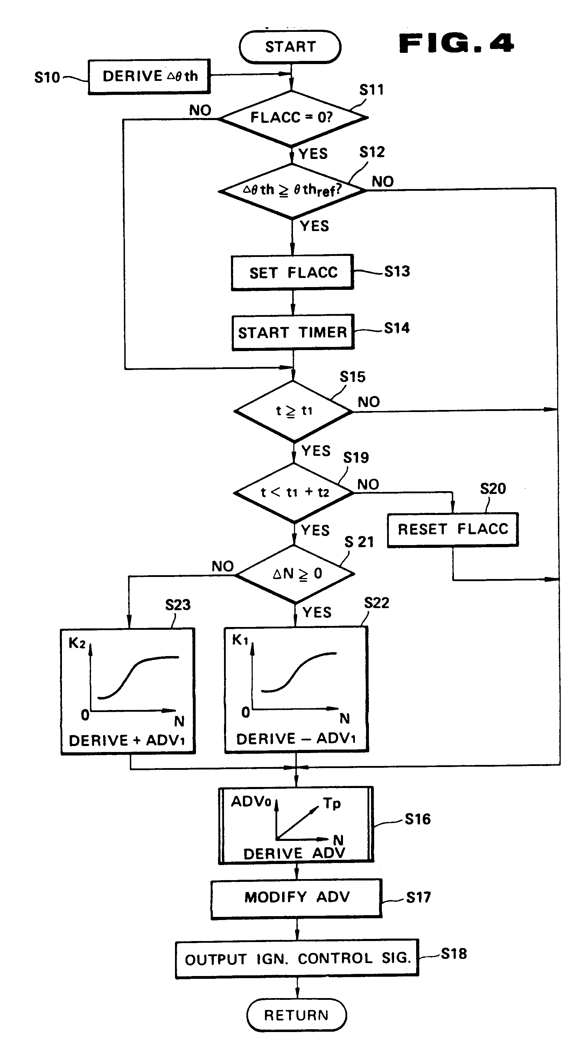

**Fig. 4** is a routine for deriving spark ignition timing and outputting a spark ignition timing control signal. The rotuine shown in **Fig. 4** is executed at pretermined timing intervals, e.g. every 10 ms to 30 ms.

Immediately after starting execution of the routine of **Fig. 4**, throttle angle signal $\theta_{th}$ is read for deriving variation of the throttle valve angular position, at a step **S10**. In practice, the throttle angular variation can be derived by comparing the throttle angle signal value $\theta_{th}$ read in the current cycle of execution of the routine of **Fig. 4** with that read in the immediately preceding cycle. In order to enable this, memory blocks **126** and **128** are provided in RAM for storing the throttle angle data $\theta th_{old}$ and $\theta th_{new}$. At the process **S10**, the throttle angle data is updated and subsequently a throttle valve open angle variation indicative data $\Delta \theta_{th}$ ($\theta th_{new} - \theta th_{old}$) is derived. At a step **S11**, an engine accelerating condition indicative flag FLACC which is to be set in an engine acceleration indicative flag register **130** in the control unit **100**, is checked. When the engine acceleration indicative flag FLACC is not set as checked at the step **S11**, a check is performed to determine whether the throttle valve open angle variation indicative data $\Delta \theta_{th}$ is greater than a predetermined acceleration criterion $\theta th_{ref}$, at a step **S12**.

When the throttle valve opening angle variation indicative data $\Delta \theta_{th}$ is greater than or equal to the acceleration criterion $\theta th_{ref}$, as checked at the step **S12**, the engine acceleration indicative flag FLACC is set at a step **S13**. Then, an acceleration transition timer **132** in the control unit **100** is triggered at a step **S14**. Therefore, the acceleration transistion timer **132** starts to count up clock pulses generated by a clock generator **134**.

After starting the acceleration transistion timer **132** at the step **S14**, or when the engine acceleration indicative flag FLACC is set as checked at the steo **S11**, the process goes to a step **S15**. At the step **S15**, the acceleration transition timer valve t of the acceleration transition timer **132** is compared with a first reference timer value $t_1$. The first reference timer value $t_1$ represents a predetermined initial period through which jerking suppressive spark ignition timing control is not performed. Therefore, in this $t_1$ period, the spark ignition timing is determined simply depending upon the normal spark ignition control parameters and correction parameters. Because of engine acceleration demand, the engine speed N increases to cause advance of the spark advance accordingly.

Therefore, when the acceleration transition timer value t is smaller than the first reference timer value $t_1$, process goes to a step **S16** to determine a basic spark advance ADV on the basis of the Tp value and the engine speed N. In practical procedure, derivation of the basic spark advance ADV is performed by table look-up utilizing a known three dimentional loo-up table set in ROM **106**. The basic spark advance ADV is corrected at a step **S17** based on various correction factors, such as engine temperature condition, engine knocking condition and so forth. Through the process in the step **S17**, actual spark ignition timing is derived. Based on the spark ignition timing derived at the step **S17**, spark ignition control signal is output at a step **S18**.

On the other hand, when the acceleration transition timer value t is greater than or equal to the first reference timer value $t_1$ as checked at the step **S15**, the acceleration transition timer value t is compared with a second reference timer value $t_{tr}$ - ($t_1$ + $t_2$: where $t_2$ represents a predetermined period for performing jerking suppressive spark ignition timing control), at a step **S19**. When the acceleration transition timer value t is greater than or equal to the second reference timer value $t_{tr}$, the engine acceleration condition indicative flag FLACC is reset at a step **S20** and thereafter the process goes to the step **S16** so that the spark ignition timing will be determined without including the jerk suppressive correction factor.

On the other hand, when the acceleration transition timer value t is smaller than the second reference timer value $t_{tr}$, the engine speed variation indicative value $\Delta N$ is compared with zero at a step **S21**.

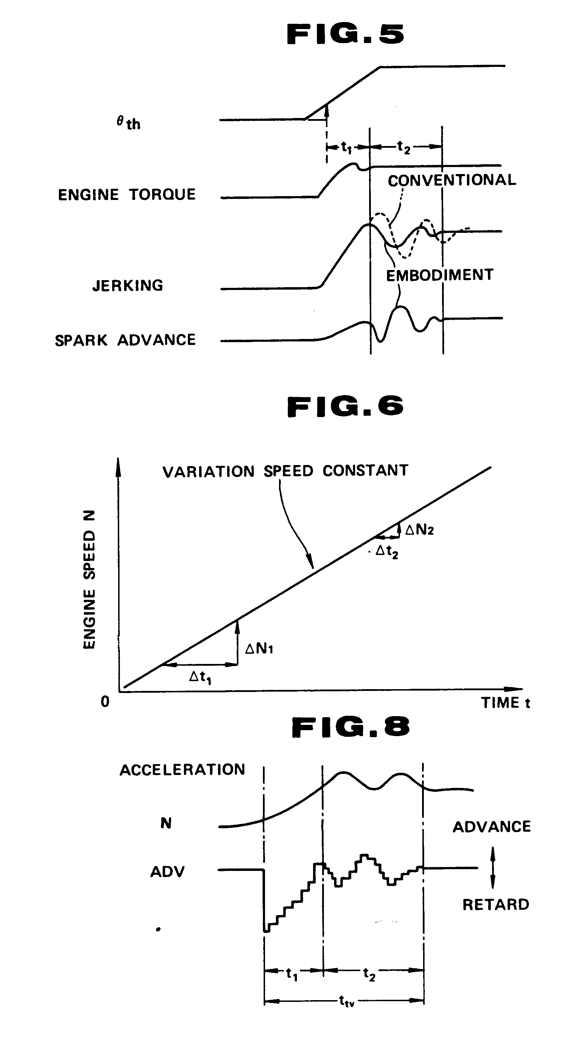

Here, reference is made to **Fig. 5** in which are shown engine output torque variation variable during engine acceleration in response to increase of the throttle open angle. As set forth, during this engine acceleration period, engine speed tends to fluctuate due to inertia moment for causing longitudinal moment which results in rocking of the engine block on the engine mount due to torsional variation effects at resonant speeds and thus in jerking as shown in **Fig.5**. Therefore, in the preferred embodiment of the spark ignition control system, according to the invention, spark ignition timing is so adjusted as to advance the timing while the engine speed decreases and to retard while the engine speed increases during acceleration transition. Such adjustment of the spark ignition timing reduces drive torque fluctuation in the power train of the vehicle and thus reduces the magnitude of jerking to be caused during engine acceleration transition.

In view of this, when the engine speed variation indicative data $\Delta N$ is greater than or equal to zero, which engine speed variation indicative data represents increasing of engine speed, jerking suppressive correction value for retarding spark advance ADV is determined at a step **S22**. In the practical process, the jerking suppressive spark advance retarding magnitude $-ADV_1$ is determined according to the following equaition:

$$-ADV_1 = \Delta N \times k_1$$

where $k_1$ is a coefficient variable depending upon the engine speed and derived by looking-up a map or table which contains experimentarily determined values in relation to the engine speed N.

The engine speed dependent variation of the coefficient $K_1$ is necessary in order to compensate for variation in the length of the engine speed sampling period depending upon the engine speed. Namely, as shown in **Fig. 6**, the engine speed variation indicative data $\Delta N$ may vary depending upon engine speed sampling timing. For instance, when the engine speed is relatively low, the intervals $\Delta t_1$ between occurences of the crank reference signals $\theta_{ref}$ becomes greater than that $\Delta t_2$ sampled at high engine speed range. In the example of **Fig. 6**, though the acceleration rate is unchanged, the engine speed variation indicative data $\Delta N_1$ as sampled in the interval $\Delta t_1$ becomes much greater than the data $\Delta N_2$ as sampled in the interval $\Delta t_2$. Since the relationship between the sampling period and engine speed variation indicative value difference will be constant with respect to any given engine, it can be compensated by varying the $k_1$ value according to known engine speed dependent characteristics.

The jerking suppressive correction value $-ADV_1$ as derived at the step **S22** is utilized in the spark advance correction to be performed in the step **S17** set forth above as one of the spark advance correction factors.

On the other hand, when the engine speed variation indicative value $\Delta N$ is smaller than zero, which represents decreasing of the engine speed, a correction value $+ADV_1$ for advancing the spark advance is determined according to the following equation:

$$ADV_1 = \Delta N \times k_2$$

where $k_2$ is a correction value variable depending upon the engine speed and derived by looking-up a map or table which contains experimentarily determined values in relation to the engine speed N at a step S 23.

The jerking suppressive correction value $+ADV_1$ derived at the step **S23** is also used in correction of the spark advance ADV at the step **S17**.

On the other hand, when the throttle valve open angle variation indicative data $\Delta\theta_{th}$ as checked at the step **S13** is smaller than the acceleration criterion, which would indicate that the engine is not in an accelerating state, the process directly goes to the step **S16** after the step **S13**.

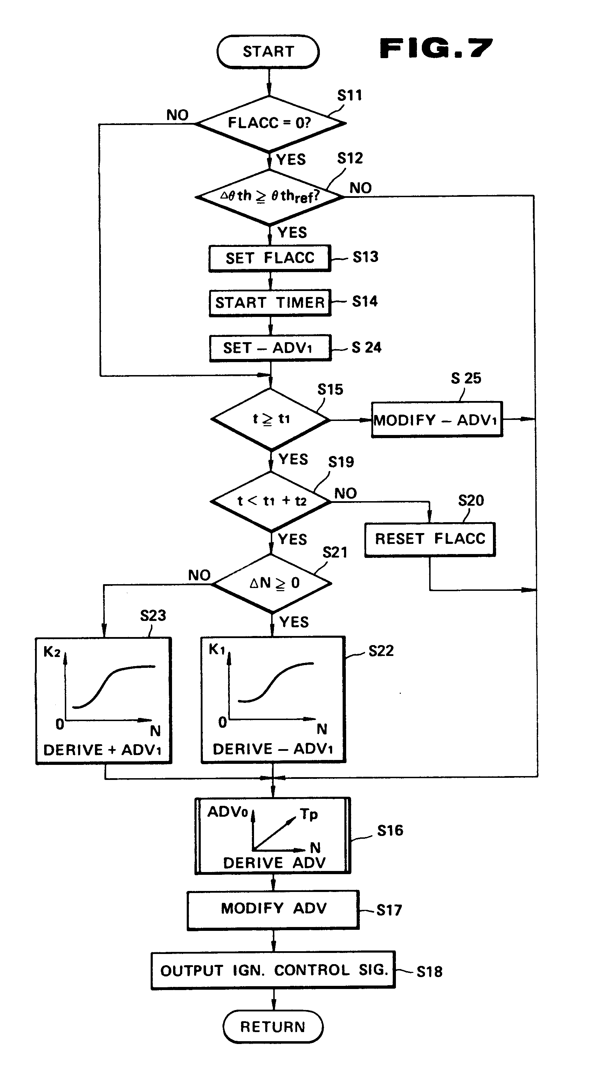

**Fig. 7** is a modified version of the routine of that in **Fig. 4**. In the modified routine, the spark advance is initially retarded in response to occurence of the acceleration demand for making the acceleration transition further smoother. Since the process of the jerking suppressive spark ignition timing control is substantially the same as that discussed with respect to the routine of **Fig. 4**, the following discussion will be directed to the details of the process which are different from that of the routine of **Fig. 4**. The process steps common to the former routine will be represented by the same step numbers and the detailed discussion thereof will be neglected.

In the shown routine, a step **S24** is added between the steps **S14** and **S15**. At the step **S24**, an initial spark advance retarding correction value $-ADV_1$ is set. The initial spark advance retarding correction value $-ADV_1$ to be initially set is a fixed value. By this spark advance retarding correction value $-ADV_1$ as set at the step **S24** is utilized for temporarily retarding the spark advance in response to the occurence of engine acceleration, as shown in **Fig. 8**. In the practical operation, the spark advance retarding correction value $-ADV_1$ set at the step **S24** is used in correction process for the spark advance performed in the step **S17**.

Another step **S25** is also added between the steps **S15** and **S_16**. In the step **S25**, the spark advance retarding correction value $-ADV_1$ as set at the step **S24** is modified to reduce retarding magnitude to a given value. Therefore, during the $t_1$ period, the spark advance once retarded by a given magnitude depending on the initial spark advance retarding correction value $-ADV_1$, is advanced by a given magnitude, as shown in **Fig. 8**.

As will be appreciated, though the routine of Fig. 7 clearly degrades acceleration response characteristics at the initial moment of engine acceleration, it clearly improves the drivability and riding comfort by providing smooth acceleration transition.

As will be appreciated, the spark ignition timing control system according to the present invention, is successful in suppressing jerking which tends to occur during acceleration transition period.

**Claims**

1. A spark ignition timing control system for an internal combustion engine comprising:

   a) sensor means (3, 5, 12) for monitoring preselected parameters including engine speed for producing a sensor signal therefrom;

   b) first means (S16) for deriving a spark ignition timing (ADVo) on the basis of data contained in said sensor signal;

   c) second means (S11, S12) for detecting an engine acceleration demand for producing an accelerating condition indicative signal; and

   d) third means (S13, S14, S17-S25) for modifying said spark ignition timing (ADVo) derived by said first means in such a manner that the spark ignition timing (ADV) is advanced and retarded for suppressing a cycle-to-cycle fluctuation of the engine speed and for smoothly increasing the engine speed,

characterised in

that the ignition timing controlling system further includes fourth means (132) for measuring the time upon producing the acceleration condition indicative signal from said second means (S11, S12) and

that during a second predetermined period of time (t2) in an acceleration transition period following a first predetermined period of time (t1) which is measured by said fourth means (132) upon the producing of the acceleration condition indicative signal, said third means (S13, S14, S17-S25) advances the ignition timing in response to an engine speed fluctuation in the decelerating direction and retards said spark ignition timing in response to an engine speed fluctuation in the accelerating direction.

2. A spark ignition timing control system as set forth in claim 1, characterized in

that said third means is responsive to said accelerating condition indicative signal to retard the spark ignition timing by a predetermined magnitude and subsequently advance the spark ignition timing by a given magnitude which is substantially smaller than said predetermined retarding magnitude, during the first predetermined period (t1).

3. A spark ignition timing control system as set forth in claim 1, characterized in

that said third means (S13, S14; S17-S25) varies the magnitude of advancing and retarding of the spark ignition timing in response to engine speed fluctuation according to the engine speed.

4. A spark ignition timing control system as set forth in claim 3, characterized in

that said third means (S13, S14; S17-S25) derives said magnitude of advancing or retarding of the spark ignition timing as a function of the engine speed.

5. A spark ignition timing control system as set forth in one of the claims 1 to 4, characterized in

that said second means (S11, S12) is associated with a throttle angle sensor (5) which monitors a throttle valve angular position to produce a throttle angle signal, for detecting increase of throttle valve angular displacement to increase a throttle valve open angle in a ratio greater than a predetermined value for producing said accelerating condition indicative signal.

6. A spark ignition timing control system as set forth in claims 1 to 5, characterized in

that said sensor means (3, 5, 12) comprises a crank angle sensor (12) for producing a crank references signal at every predetermined angular position of a crankshaft, and said first means (S16) derives the engine speed (N) on the basis of the interval between subsequently occurring crank reference signals.

7. Method of controlling the ignition timing for an internal combustion engine comprising the steps of:

monitoring (S1-S6) preselected parameters including engine speed for producing a sensor signal;

deriving (S16) a spark ignition timing (ADVo) on the basis of data contained in said sensor signal;

detecting (S11, S17) an engine acceleration demand for producing an accelerating condition indicative signal; and

modifying (S13, S14; S17-S25) said spark ignition timing (ADVo) in such a manner that the spark ignition timing (ADV) is advanced and retarded for suppressing a cycle-to-cycle fluctuation of the engine speed and for smoothly increasing the engine speed,

characterized in

that the method further comprises the step of measuring the time upon producing the acceleration condition indicative signal and

that said method step of modifying said spark ignition timing causes an advancing of said spark ignition timing in response to engine speed fluctuation in the decelerating direction and a retarding of said spark ignition timing in response to engine speed fluctuation in the acceleration direction, during a second predetermined period of time (t2) in an acceleration transition period following a first predetermined period of time (t1) upon the producing of the acceleration condition indicative signal.

**Revendications**

1. Un système de commande de l'allumage par étincelle électrique d'un moteur à combustion interne comprenant:

a) un moyen détecteur (3, 5, 12) destiné à surveiller des paramètres présélectionnés, y compris la vitesse du moteur, pour engendrer un signal de détecteur à partir de ceux-ci,

b) un premier moyen (S16) destiné à dériver un réglage d'allumage par étincelle électrique (ADVo) sur base des données contenues dans ledit signal de détecteur,

c) un second moyen (S11, S12) destiné à détecter une demande d'accélération du moteur, pour engendrer un signal indiquant la condition d'accélération, et

d) un troisième moyen (S13, S14, S17-S25) destiné à modifier le réglage d'allumage par étincelle électrique (ADVo) dérivé par ledit premier moyen, de telle manière que le réglage d'allumage par étincelle électrique (ADV) est avancé et retardé pour supprimer une fluctuation d'un cycle à l'autre de la vitesse du moteur et pour supprimer les soubresauts en phase d'accélération, caractérisé en ce que le système de commande de l'allumage comprend, en outre, un quatrième moyen (132) destiné à mesurer le temps à partir de l'engendrement du signal d'indication de la condition d'accélération par ledit second moyen (S11, S12), et que, pendant un second laps de temps (t2) prédéterminé au cours d'une période de transition d'accélération suivant un premier laps de temps (t1) prédéterminé qui est mesuré par ledit quatrième moyen (132) à partir de l'engendrement du signal d'indication de la condition d'accélération, ledit troisième moyen (S13, S14, S17-S25) avance le réglage d'allumage en réponse à une fluctuation de la vitesse du moteur dans le sens du ralentissement et retarde ledit réglage d'allumage par étincelle électrique en réponse à une fluctuation de la vitesse du moteur dans le sens de l'accélération.

2. Un système de commande de l'allumage par étincelle électrique suivant la revendication 1, caractérisé en ce que ledit troisième moyen réagit audit signal indiquant la condition d'accélération pour retarder le réglage d'allumage par étincelle électrique d'une grandeur prédéterminée et, ensuite, avancer le réglage d'allumage par étincelle électrique d'une grandeur donnée qui est sensiblement inférieure à ladite grandeur de retard prédéterminée, pendant la première période (t1) prédéterminée.

3. Un système de commande de l'allumage par étincelle électrique suivant la revendication 1, caractérisé en ce que ledit troisième moyen (S13, S14; S17-S25) fait varier la grandeur d'avance ou de retard du réglage d'allumage par étincelle électrique en réponse à la fluctuation de la vitesse du moteur suivant la vitesse du moteur.

4. Un système de commande de l'allumage par étincelle électrique suivant la revendication 3, caractérisé en ce que ledit troisième moyen (S13, S14; S17-S25) dérive ladite grandeur d'avance ou de retard du réglage d'allumage par étincelle électrique en fonction de la vitesse du moteur.

5. Un système de commande de l'allumage par étincelle électrique suivant l'une des revendications 1 à 4, caractérisé en ce que ledit second moyen (S11, S12) est associé à un détecteur d'angle d'étranglement (5) qui surveille une position angulaire de vanne-papillon pour engendrer un signal d'angle d'étranglement, destiné à détecter l'augmentation du déplacement angulaire de la vanne-papillon afin d'augmenter un angle d'ouverture de la vanne-papillon selon un rapport supérieur à une valeur prédéterminée, pour engendrer ledit signal indiquant la condition d'accélération.

6. Un système de commande de l'allumage par étincelle électrique suivant les revendications 1 à 5, caractérisé en ce que ledit moyen détecteur (3, 5, 12) comprend un détecteur d'angle de manivelle (12) destiné à engendrer un signal de référence de manivelle à chaque position angulaire prédéterminée d'une manivelle et que ledit premier moyen (S16) dérive la vitesse du moteur (N) sur base de l'intervalle entre des signaux de référence de manivelle successifs.

7. Méthode de commande du réglage d'allumage d'un moteur à combustion interne, comprenant les étapes consistant à:

surveiller (S1-S6) des paramètres présélectionnés, y compris la vitesse du moteur, pour engendrer un signal de détecteur,

dériver (S16) un réglage d'allumage par étincelle électrique (ADVo) sur base des données contenues dans ledit signal de détecteur,

détecter (S11, S17) une demande d'accélération du moteur pour engendrer un signal indiquant la condition d'accélération, et

modifier (S13, S14, S17-S25) ledit réglage d'allumage par étincelle électrique (ADVo) de telle manière que le réglage d'allumage par étincelle électrique (ADV) est avancé et retardé pour supprimer une fluctuation d'un cycle à l'autre de la vitesse du moteur et pour supprimer les soubresauts en phase d'accélération, caractérisée en ce que ladite méthode comprend, en outre, l'étape consistant à mesurer le temps à partir de l'engendrement du signal d'indication de la condition d'accélération, et que ladite étape de la méthode consistant à modifier ledit réglage d'allumage par étincelle électrique provoque une avance dudit réglage d'allumage par étincelle électrique en réponse à une fluctuation de la vitesse du moteur dans le sens du ralentissement et un retard dudit réglage d'allumage par étincelle électrique en réponse à une fluctuation de la vitesse du moteur dans le sens de l'accélération, pendant un second laps de temps (t2) prédéterminé d'une période de transition d'accélération suivant un premier laps de temps (t1) à partir de l'engendrement du signal d'indication de la condition d'accélération.

**Patentansprüche**

1. Zündzeitpunkt-Steuerungssystem für einen Motor mit innerer Verbrennung umfassend:

   a) eine Sensoreinrichtung (3, 5, 12) zum Überwachen vorausgewählter Parameter einschließlich der Motordrehzahl zum Erzeugen eines Sensorsignals hieraus;

   b) eine ersten Einrichtung (S16) zum Ableiten eines Zündzeitpunktes (ADVo) auf der Grundlage von in dem Sensorsignal enthaltenen Daten;

   c) eine zweiten Einrichtung (S11, S12) zum Erfassen einer Motorbeschleunigungsanforderung zur Erzeugung eines einen Beschleunigungszustand anzeigenden Signals; und

   d) eine dritte Einrichtung (S13, S14, S17-S25) zum Abändern des von der ersten Einrichtung abgeleiteten Zündzeitpunktes (ADVo) derart, daß der Zündzeitpunkt (ADV) vorgestellt und verzögert wird, um eine Schwankung der Motordrehzahl von einem Zyklus zum nächsten zu unterdrücken und um die Motordrehzahl ruckfrei zu erhöhen, dadurch gekennzeichnet, daß das Zündzeitpunkt-Steuerungssystem ferner eine vierte Einrichtung (132) aufweist, um die Zeit ab dem Erzeugen des den Beschleunigungszustand anzeigenden Signals durch die zweite Einrichtung (S11, S12) zu messen, und daß während eines zweiten vorbestimmten Zeitintervalls (t2) in einem Beschleunigungsübergangszeitintervall, das einem ersten vorbestimmten Zeitintervall (t1) folgt, das durch die vierte Einrichtung (132) ab dem Erzeugen des den Beschleunigungszustand anzeigenden Signals gemessen wird, die dritte Einrichtung (S13, S14, S17-S25) den Zündzeitpunkt im Ansprechen auf eine Motordrehzahlschwankung in Richtung einer Verlangsamung vorstellt und den Zündzeitpunkt im Ansprechen auf eine Motordrehzahlschwankung in Richtung einer Beschleunigung verzögert.

2. Zündzeitpunkt-Steuerungssystem nach Anspruch 1, dadurch gekennzeichnet, daß die dritte Einrichtung auf das den Beschleunigungszustand anzeigende Signal anspricht, um während der ersten Zeitdauer (t1) den Zündzeitpunkt um eine vorbestimmte Größe zu verzögern und daraufhin den Zündzeitpunkt um eine gegebene Größe vorzustellen, die wesentlich kleiner als die vorbestimmte Verzögerungsgröße ist.

3. Zündzeitpunkt-Steuerungssystem nach Anspruch 1, dadurch gekennzeichnet, daß die dritte Einrichtung (S13, S14; S17-S25) die Vorstell- und Verzögerungsgröße des Zündzeitpunktes im Ansprechen auf Motordrehzahlschwankungen gemäß der Motordrehzahl verändert.

4. Zündzeitpunkt-Steuerungssystem nach Anspruch 3, dadurch gekennzeichnet, daß die dritte Einrichtung (S13, S14; S17-S25) die Größe für das Vorstellen oder Verzögern des Zündzeitpunktes als eine Funktion der Motordrehzahl ableitet.

5. Zündzeitpunkt-Steuerungssystem nach einem der Ansprüche 1 bis 4, dadurch gekennzeichnet, daß die zweite Einrichtung (S11, S12) mit einem Drosselventilwinkelsensor (5) verbunden ist, der eine Drosselventilwinkelstellung überwacht, um ein Drosselventilwinkelsignal zu erzeugen, um eine Zunahme des Drosselventilwinkels zu erfassen, um einen Drosselventilöffnungswinkel in einem größeren Verhältnis als ein vorbestimmte Wert zur Erzeugung des den Beschleunigungszustand anzeigenden Signals zu erhöhen.

6. Zündzeitpunkt-Steuerungssystem nach einem der Ansprüche 1 bis 5, dadurch gekennzeichnet, daß die Sensoreinrichtung (3, 5, 12) einen Kurbelwinkelsensor (12) zum Erzeugen eines Kurbelbezugssignals bei jeder vorbestimmten Winkelstellung einer Kurbelwelle aufweist, und die erste Einrichtung (S16) die Motordrehzahl (N) auf der Grundlage des Zeitintervalls zwischen aufeinanderfolgend auftretenden Kurbelbezugssignalen ableitet.

7. Verfahren zur Steuerung des Zündzeitpunktes bei einem Motor mit innerer Verbrennung, welches folgende Schritte aufweist: Überwachen (S1-S6) vorausgewählter Parameter einschließlich der Motordrehzahl zur Erzeugung eines Sensorsignals;

Ableiten (S16) eines Zündzeitpunktes (ADVo) auf der Grundlage der in dem Sensorsignal enthaltenen Daten;

Erfassen (S11, S17) einer Motorbeschleunigungsanforderung zur Erzeugung eines den Beschleunigungszustand anzeigenden Signals; und

Abändern (S13, S14; S17-S25) des Zündzeitpunktes (ADVo) derart, daß der Zündzeitpunkt (ADV) vorgestellt und verzögert wird, um eine Motordrehzahlschwankung von einem Zyklus zum nächsten zu unterdrücken und um die Motordrehzahl ruckfrei zu erhöhen,

dadurch gekennzeichnet,

daß das Verfahren ferner den Schritt umfaßt, die Zeit bei der Erzeugung des den Beschleunigungszustand anzeigenden Signals zu messen, und

daß der Verfahrensschritt der Abänderung des Zündzeitpunktes ein Vorstellen des Zündzeitpunktes im Ansprechen auf eine Motordrehzahlschwankung in Richtung einer Verlangsamung und ein Verzögern des Zündzeitpunktes im Ansprechen auf eine Motordrehzahlschwankung in Richtung einer Beschleunigung während eines zweiten vorbestimmten Zeitintervalls (t2) in einem Beschleunigungsübergangszeitintervall bewirkt, das einem ersten vorbestimmten Zeitintervall (t1) beim Erzeugen des den Beschleunigungszustand anzeigenden Signals folgt.

# FIG.1

CONTROL
UNIT

# FIG. 2

EP 0 284 054 B1

# FIG.3

```
                    ┌─────────────┐
                    │    START    │
                    └──────┬──────┘
                           │
                           ▼            ╱─S1
                      ╱─────────╲
                     ╱    IS     ╲
                    ╱ θref RECEIVED╲────── NO
                    ╲      ?       ╱
                     ╲────────────╱
                           │ YES
                           ▼
                 ┌──────────────────┐   S2
                 │    LATCH TN      │─╱
                 └────────┬─────────┘
                          ▼
                 ┌──────────────────┐   S3
                 │  DERIVE Tref     │─╱
                 └────────┬─────────┘
                          ▼
                 ┌──────────────────┐
                 │    DERIVE N      │   S4
                 │          60      │─╱
                 │  No = ──────     │
                 │        2TREF     │
                 └────────┬─────────┘
                          ▼
                 ┌──────────────────┐
                 │ UPDATE           │
                 │ ENGINE SPEED     │   S5
                 │ DATA             │─╱
                 │  Nθ ◄──── N      │
                 │  N  ◄──── No     │
                 └────────┬─────────┘
                          ▼
                 ┌──────────────────┐   S6
                 │  DERIVE ΔN       │─╱
                 │  ΔN = N − Nθ     │
                 └────────┬─────────┘
                          ▼
                    ┌─────────────┐
                    │   RETURN    │
                    └─────────────┘
```

DERIVE N

$$No = \frac{60}{2T_{REF}}$$

UPDATE ENGINE SPEED DATA

$N\theta \longleftarrow N$

$N \longleftarrow No$

DERIVE ΔN

$\Delta N = N - N\theta$

EP 0 284 054 B1

**FIG.4**

START

S10 — DERIVE $\Delta\theta$ th

S11 — FLACC = 0?
NO / YES

S12 — $\Delta\theta$ th $\geqq \theta$ th$_{ref}$?
NO / YES

S13 — SET FLACC

S14 — START TIMER

S15 — t $\geqq$ t1
NO / YES

S19 — t < t1 + t2
NO / YES

S20 — RESET FLACC

S21 — $\Delta$N $\geqq$ 0
NO / YES

S23 — K2 ... N — DERIVE + ADV1

S22 — K1 ... N — DERIVE − ADV1

S16 — ADV0 / Tp ... N — DERIVE ADV

S17 — MODIFY ADV

S18 — OUTPUT IGN. CONTROL SIG.

RETURN

14

# FIG.5

# FIG.6

# FIG.8

# FIG.7

START

FLACC = 0? — S11

NO

YES — S12

$\Delta \theta th \geqq \theta th_{ref}$?

NO

YES

SET FLACC — S13

START TIMER — S14

SET — $ADV_1$ — S 24

$t \geqq t_1$ — S15

MODIFY — $ADV_1$ — S 25

YES — S19

$t < t_1 + t_2$

NO — S20

YES

RESET FLACC

$\Delta N \geqq 0$ — S21

NO

YES

DERIVE + $ADV_1$ — S23

DERIVE — $ADV_1$ — S22

DERIVE ADV — S16

MODIFY ADV — S17

OUTPUT IGN. CONTROL SIG. — S18

RETURN